# FASCICULE DE BREVET EUROPEEN

(11) **EP 1 048 786 B1**
(45) Date de publication et mention de la délivrance du brevet: **22.12.2004**
(21) Numéro de dépôt: 00401117.7
(22) Date de dépôt: 20.04.2000
(51) Int. Cl.: E01C 19/20, B60P 1/36

(54) **Dispositif d'épandage d'un matériau granulaire, notamment pour le traitement des routes**
Streueinrichtung von körnigem Material insbesondere zur Behandlung von Strassen
Spreading device of granular material especially for treating roads

(30) Priorité: 27.04.1999 FR 9905311
(43) Date de publication de la demande: 02.11.2000
(73) Titulaire: Giletta S.p.A., 12036 Revello (Cuneo) (IT)
(72) Inventeur: Pradines René, 78800 Houilles (FR)
(74) Mandataire: Quinterno, Giuseppe

(56) Documents cités:
- FR-A- 767 353
- FR-A- 768 226

## Description

L'invention se rapporte à l'épandage de matériaux granulaires, notamment pour le traitement des routes.

. Elle vise en particulier à procurer un dispositif propre à épandre des matériaux granulaires de natures diverses convenant aussi bien au traitement hivernal des routes (sablage, salage, etc...) qu'à la construction ou à la réparation des routes.

Ainsi, les matériaux granulaires à prendre en considération comprennent notamment du sel, du sable, des gravillons, etc...

On connaît déjà des dispositifs d'épandage tels que dans le document FR-A-767 353 qui comprennent un distributeur propre à être fixé à l'arrière d'une benne de camion ou analogue et un chargeur pour alimenter le distributeur avec le matériau contenu dans la benne.

Dans les dispositifs connus de ce genre, le distributeur est généralement réalisé sous la forme d'une trémie qui reçoit le matériau granulaire à partir de la benne et qui est elle-même munie de moyens répartiteurs, en particulier du type à disque, pour envoyer, dans des quantités dosées, le matériau granulaire sur la route à traiter.

Le distributeur est alors habituellement fixé à l'arrière du châssis du camion et le chargement du distributeur s'effectue en faisant basculer la benne pour faire glisser, par gravité, le matériau dans la trémie du distributeur.

Cette solution connue présente plusieurs inconvénients. Tout d'abord, elle oblige de fixer le distributeur au châssis du camion. En outre, mais surtout, elle nécessite d'utiliser un camion à benne basculante pour assurer le chargement du distributeur. Or, l'utilisation d'une telle benne basculante présente notamment pour inconvénient que, lorsque la benne bascule, le conducteur du camion ne peut plus surveiller les opérations de chargement du distributeur à partir du poste de conduite. En effet, la benne masque alors la vue du conducteur.

L'invention a notamment pour but de surmonter les inconvénients précités.

Elle vise en particulier à procurer un dispositif d'épandage du type défini précédemment, lequel peut fonctionner avec un camion à benne non basculante, en particulier avec un plateau à ridelles.

L'invention propose à cet effet un dispositif d'épandage du type défini en introduction, dans lequel le chargeur comprend un tapis souple propre à reposer sur un fond sensiblement horizontal de la benne et à supporter le matériau, un mécanisme enrouleur disposé à l'arrière de la benne et relié à une extrémité arrière du tapis, un mécanisme à câble relié à une extrémité avant du tapis, et des moyens de coordination du mécanisme enrouleur et du mécanisme à câble, de telle sorte que le tapis peut être soit déplacé vers l'arrière de la benne sous l'action du mécanisme enrouleur en vue de l'alimentation du distributeur, soit déplacé vers l'avant de la benne sous l'action du mécanisme à câble en vue du chargement de la benne.

Ainsi, le chargement du distributeur s'effectue par un tapis qui se déplace sur le fond sensiblement horizontal de la benne et qui est propre à déplacer le matériau vers le distributeur, sans qu'il soit nécessaire de faire basculer la benne.

Il en résulte que le dispositif peut être facilement installé sur un camion comprenant une benne fixe, voire un plateau.

De ce fait, le conducteur du camion peut surveiller et contrôler les opérations de chargement du distributeur, à partir de son poste de conduite.

En outre, ce dispositif peut être facilement installé directement sur la benne du camion, et non pas sur le châssis de celui-ci, contrairement aux dispositifs de la technique antérieure.

Selon une autre caractéristique de l'invention, le mécanisme enrouleur comprend un rouleau d'axe horizontal autour duquel s'enroule ou se déroule le tapis, et des moyens moteurs pour entraîner ledit rouleau autour de son axe dans le sens de l'enroulement ou dans le sens du déroulement du tapis.

Avantageusement, ce rouleau est porté par le distributeur.

Dans l'invention, le mécanisme à câble comprend avantageusement deux câbles dont chacun comporte une extrémité arrière attachée à une poulie motrice synchronisée avec le mécanisme enrouleur, passe autour d'une poulie de renvoi à l'avant de la benne, et comporte une extrémité avant fixée à l'extrémité avant du tapis.

De préférence, les poulies motrices sont calées sur l'axe de rotation du rouleau, tandis que les câbles s'enroulent autour des poulies motrices en sens inverse par rapport au sens d'enroulement du tapis autour du rouleau, en sorte que le tapis s'enroule, alors que les câbles se déroulent, et vice versa.

Pour réaliser une compensation, chacune des poulies motrices comprend avantageusement une gorge étroite propre à permettre l'enroulement du câble en spirale de sorte que l'enroulement du tapis sur une longueur donnée corresponde au déroulement du câble sur une longueur sensiblement égale, et vice versa.

Selon une autre caractéristique de l'invention, le mécanisme à câble comprend en outre deux poulies de tension autour desquelles s'enroulent respectivement les deux câbles pour les maintenir sous tension.

Ces deux poulies de tension sont de préférence portées par le distributeur.

Les deux poulies de renvoi sont avantageusement portées chacune par un support propre à être fixé à une partie antérieure de la benne.

Ainsi, le dispositif de l'invention peut être facilement monté sur une benne standard d'un camion.

Selon une autre caractéristique de l'invention, le tapis est muni à son extrémité avant d'une paroi verticale servant à retenir le matériau. Ainsi, cette paroi verticale, formant séparation, se déplace en même temps que le tapis.

Selon encore une autre caractéristique de l'invention, le distributeur comprend une trémie alimentée par le chargeur et munie de moyens répartiteurs propres à épandre la matériau granulaire.

Dans la description qui suit, faite seulement à titre d'exemple, on se réfère aux dessins annexés, sur lesquels :
- la figure 1 est une vue de côté d'un dispositif d'épandage selon l'invention fixé sur une benne d'un camion, le tapis du dispositif étant en position déroulée ;
- la figure 2 est une vue partielle de dessus correspondant à la figure 1 ;
- la figure 3 est une vue analogue à la figure 1 dans laquelle le tapis est en position enroulée ;
- la figure 4 est une vue du rouleau du dispositif et des poulies motrices associées ;
- la figure 5 représente le détail V de la figure 4 à échelle agrandie ;
- la figure 6 est une vue partielle d'extrémité du distributeur dans une forme de réalisation de l'invention ; et
- la figure 7 est une vue analogue à la figure 6 dans une variante de réalisation.

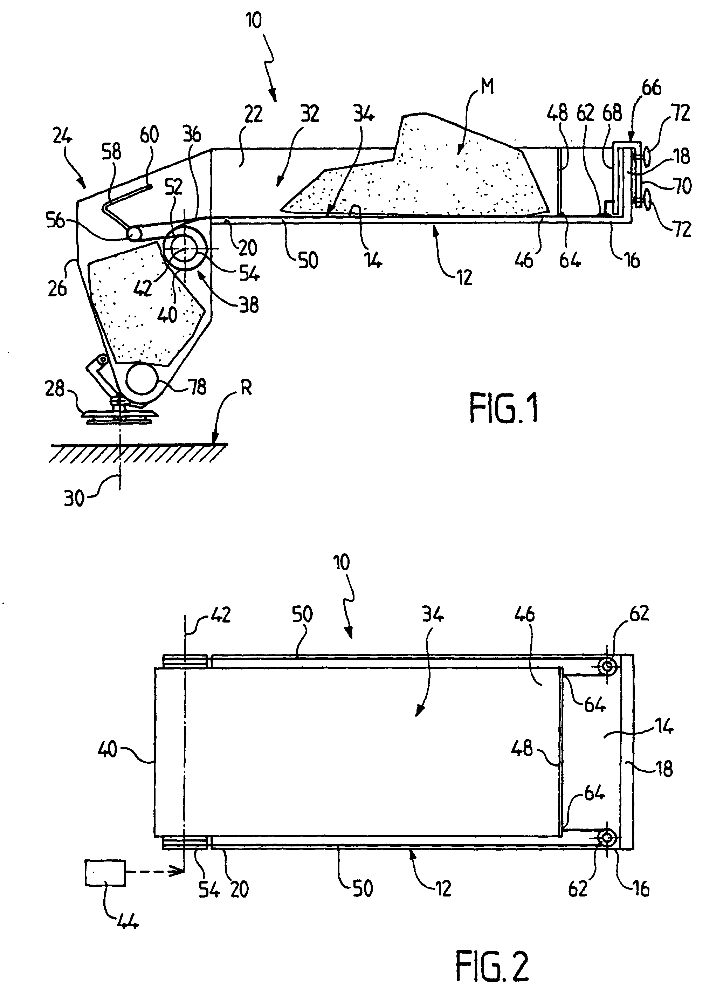

On se réfère tout d'abord aux figures 1 et 2 qui représentent un dispositif 10 selon l'invention pour l'épandage d'un matériau granulaire M, lequel est porté par une benne 12 d'un camion ou analogue. Le terme "benne" doit être compris ici au sens large comme pouvant désigner une benne, un plateau à ridelles, etc... formant support de charge d'un camion et comportant un fond sensiblement horizontal 14. Cette benne 12 comprend une extrémité avant 16 équipée d'une ridelle verticale 18 et une extrémité arrière 20 qui est dépourvue de ridelle verticale. Par ailleurs, la benne 12 comprend deux ridelles longitudinales verticales 22 dont une seule est visible sur la figure 1.

A l'arrière de la benne 12 est fixé un distributeur 24 de structure généralement connue en soi. Ce distributeur 24 comprend une trémie 26 qui est fixée directement à l'extrémité arrière 20 de la benne 12 ainsi qu'à l'extrémité arrière des ridelles 22, et non pas directement au châssis (non représenté) du camion comme dans la technique antérieure.

Cette trémie 26 est propre à être alimentée en matériau M à partir de la benne 12 pour répandre ensuite ce matériau sur une route R grâce à des moyens répartiteurs qui, dans l'exemple, comprennent essentiellement un disque 28 monté à rotation autour d'un axe 30 sensiblement vertical. La structure du distributeur 24 sera décrite plus loin.

L'alimentation du distributeur 24 est réalisée grâce à un chargeur 32 comprenant un tapis souple 34 reposant sur le fond 14 de la benne. Ce tapis souple possède une largeur qui correspond à la largeur de la benne, comme définie entre les ridelles longitudinales 22. Le matériau M est déposé sur le tapis 34, lequel peut être déplacé de l'avant vers l'arrière pour assurer le chargement du distributeur 24 ou, au contraire, de l'arrière vers l'avant pour permettre un nouveau remplissage de la benne.

Le tapis 34 comporte une extrémité arrière 36 qui est fixée et enroulée autour d'un mécanisme enrouleur 38. Celui-ci comprend un rouleau 40 monté à rotation autour d'un axe horizontal 42 s'étendant transversalement à l'arrière du véhicule. Ce rouleau est porté par le distributeur 24 et est disposé à l'intérieur de la trémie 26, dans un plan situé sensiblement en-dessous du fond 14 de la benne 12.

Le rouleau 40 est propre à être entraîné en rotation par des moyens moteurs 44 représentés schématiquement. Ces moyens permettent d'entraîner le rouleau 42 soit dans le sens de l'enroulement du tapis, soit dans son sens de déroulement.

Le tapis 34 possède une extrémité avant 46 qui porte une paroi verticale 48 servant à retenir le matériau. Cette paroi 48 s'étend dans la direction transversale et est propre à se déplacer en translation en même temps que le tapis 34.

Le chargeur 32 comprend en outre deux câbles 50, avantageusement en acier, situés de part et d'autre du tapis 34.

Chaque câble comporte une extrémité arrière 52 attachée à une poulie motrice 54 synchronisée avec le mécanisme enrouleur. Pour cela, les deux poulies motrices 54 sont situées de part et d'autre du rouleau 40 et sont calées sur l'axe de rotation 42 de celui-ci.

Chaque câble 50 passe ensuite autour d'une poulie de tension 56 supportée par un bras mobile 58 monté pivotant autour d'un axe 60 porté par le distributeur 24. Ensuite, le câble s'étend le long du fond 14 de la benne, à proximité de la ridelle correspondante 32, puis passe autour d'une poulie de renvoi 62 d'axe vertical placée à proximité de la ridelle avant 18. Ensuite, le câble est fixé par son extrémité avant 64 à l'extrémité avant 46 du tapis 34.

Chacune des poulies 62 est portée par un support 66 propre à être fixé sur la ridelle avant 18 de la benne (figure 1). Chaque support 66 a la forme d'un U et comporte une branche 68 portant la poulie 62 et une branche 70 munie de deux organes de fixation 72.

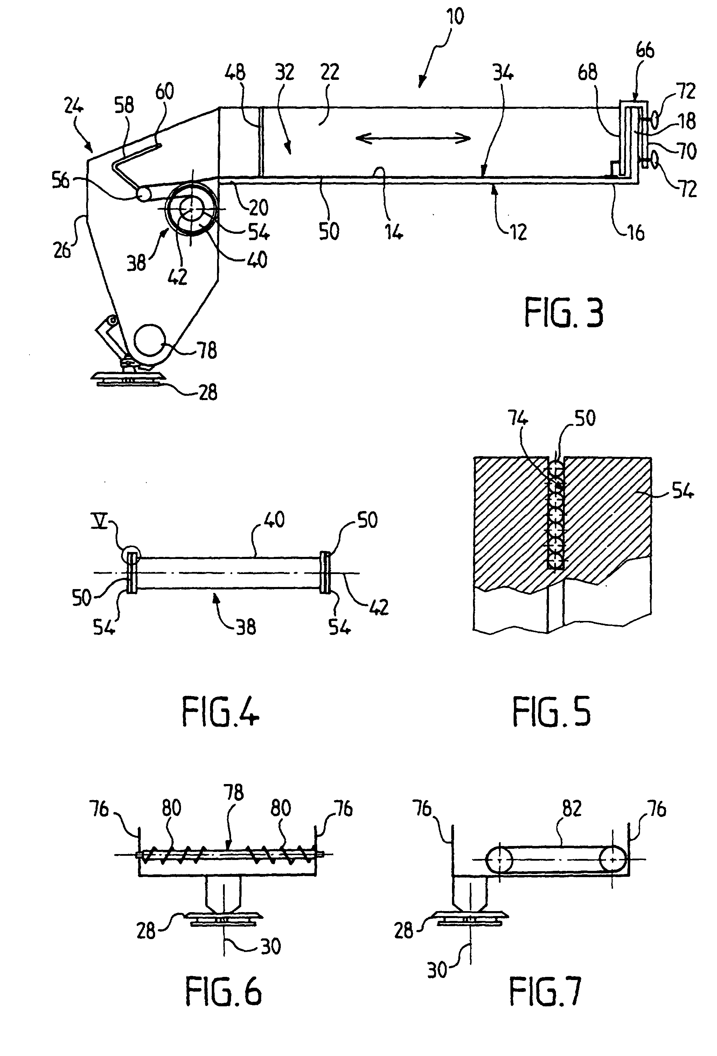

Comme on peut le voir plus particulièrement aux figures 4 et 5, chacune des poulies motrices 54 comporte une gorge étroite 74 (figure 5) dont la largeur correspond sensiblement (par valeur supérieure) au diamètre du câble, de sorte que ce câble ne peut s'enrouler qu'en spirale. De même, la diamètre de la gorge est calculé, en fonction du diamètre du câble et du diamètre du rouleau pour qu'il y ait compensation. Cela signifie que l'enroulement du tapis sur une longueur donnée correspond au déroulement de chaque câble sur une longueur sensiblement égale, et vice versa.

En effet, comme on peut le voir sur la figure 1, le sens d'enroulement du tapis 34 autour du rouleau 40 est inverse du sens d'enroulement de chacun des câbles 50 autour des poulies motrices 54.

Il en résulte que le tapis 14 s'enroule autour du rouleau 40, tandis que les câbles 50 se déroulent de leurs poulies motrices respectives 54, et inversement.

On comprendra que le dispositif de l'invention peut être implanté facilement sur la benne existante d'un camion. Il suffit pour cela de fixer le distributeur 24 sur la partie arrière de la benne 12 et de fixer les supports 66 sur la ridelle avant 18 de la benne 12, le tapis étant en position déroulée.

Dans cette position, la paroi de séparation 48, liée au tapis, se trouve vers l'avant de la benne, à proximité de la ridelle 18. On peut alors charger la benne par le matériau M, lequel est déposé sur le tapis comme montré à la figure 1.

Pour répandre ce matériau M sur la route R, il suffit de faire fonctionner le tapis, dans le sens de l'enroulement, pour le déplacer vers l'arrière et charger progressivement le matériau M dans la trémie 26. De là, le matériau est répandu sur la route grâce au disque 28.

Lorsque l'ensemble de la benne a été vidé (figure 3), la paroi de séparation 48 se trouve en position arrière.

Il suffit alors de déplacer le tapis en sens inverse, c'est-à-dire de l'arrière vers l'avant, pour ramener la paroi 48 dans la position de la figure 1. Ce mouvement s'effectue par les câbles 50 qui agissent sur l'extrémité avant 46 du tapis, en même temps que celui-ci se déroule du rouleau 40. Lorsque le tapis est déplacé vers la position avant, la benne peut être à nouveau chargée du matériau M pour permettre l'exécution d'un cycle ultérieur.

Dans la forme de réalisation de la figure 6, le disque répartiteur 28 est placé dans une position centrale de la trémie 26, c'est-à-dire à mi-distance de ses côtés latéraux. L'alimentation du disque s'effectue par une double vis sans fin 78 d'axe horizontal, ayant deux pas inversés 80, en sorte que le matériau est ramené vers la partie centrale au niveau du disque 28. Dans la variante de la figure 7, le disque 28 est implanté à proximité d'un des côtés 76 de la trémie et l'alimentation de ce disque s'effectue par un tapis roulant 82.

Ainsi, le dispositif de l'invention permet de réaliser l'alimentation du distributeur 24 à partir d'un tapis 34 qui se déplace sur le fond sensiblement horizontal de la benne. Il n'est donc plus nécessaire d'utiliser une benne basculante comme dans la technique antérieure.

En outre, le dispositif de l'invention peut être implanté facilement sur la benne ou le plateau d'un camion, sans qu'il soit nécessaire de prévoir d'aménagements spéciaux sur celui-ci.

Il en résulte que ce camion peut être réservé à d'autres utilisations, en cas de besoin.

Le dispositif de l'invention convient essentiellement au traitement des routes, qu'il s'agisse du traitement hivernal pour l'épandage de sel, sable, gravillons, etc... que pour le traitement ou la réparation des routes, le matériau pouvant être du sable, des gravillons, etc...

Bien entendu, l'invention n'est pas limitée à la forme de réalisation décrite précédemment à titre d'exemple et s'étend à d'autres variantes.

En particulier, la conception du mécanisme enrouleur et du mécanisme à câble et de leurs moyens de synchronisation sont susceptibles de nombreuses variantes de réalisation.

## Revendications

1. Dispositif d'épandage d'un matériau granulaire, notamment pour le traitement des routes, comprenant un distributeur (24) propre à être fixé à l'arrière d'une benne de camion (12) ou analogue et un chargeur (32) pour alimenter le distributeur (24) avec le matériau (M) contenu dans la benne,
**caractérisé en ce que** le chargeur (32) comprend un tapis souple (34) propre à reposer sur un fond sensiblement horizontal (14) de la benne (12) et à supporter le matériau (M), un mécanisme enrouleur (38) apte à être disposé à l'arrière de la benne et relié à une extrémité arrière (36) du tapis, un mécanisme à câble (50) relié à une extrémité avant (46) du tapis et des moyens de coordination du mécanisme enrouleur (38) et du mécanisme à câble (50) de telle sorte que le tapis peut être soit déplacé vers l'arrière de la benne sous l'action du mécanisme enrouleur (38) en vue de l'alimentation du distributeur (24) soit déplacé vers l'avant de la benne sous l'action du mécanisme à câble (50) en vue du chargement de la benne.

2. Dispositif selon la revendication 1, **caractérisé en ce que** le mécanisme enrouleur (38) comprend un rouleau (40) d'axe horizontal (42) autour duquel s'enroule ou se déroule le tapis (34) et des moyens moteurs (44) pour entraîner ledit rouleau en rotation autour de son axe dans le sens de l'enroulement ou dans le sens du déroulement du tapis.

3. Dispositif selon la revendication 2, **caractérisé en ce que** le rouleau (40) est porté par le distributeur (24).

4. Dispositif selon l'une des revendications 1 à 3, **caractérisé en ce que** le mécanisme à câble comprend deux câbles (50) dont chacun comporte une extrémité arrière (52) attachée à une poulie motrice (54) synchronisée avec le mécanisme enrouleur (38), passe autour d'une poulie de renvoi (62) à l'avant de la benne (12) et comporte une extrémité avant (64) fixée à l'extrémité avant (46) du tapis (12).

5. Dispositif selon la revendication 4, prise en combinaison avec la revendication 2, **caractérisé en ce que** les poulies motrices (54) sont calées sur l'axe de rotation (42) du rouleau (40) et **en ce que** les câbles (50) s'enroulent autour des poulies motrices (54) en sens inverse par rapport au sens d'enroulement du tapis (12) autour du rouleau (40) en sorte que le tapis (34) s'enroule, alors que les câbles (50) se déroulent, et vice versa.

6. Dispositif selon l'une des revendications 4 et 5, **caractérisé en ce que** chacune des poulies motrices (54) comprend une gorge étroite (74) propre à permettre l'enroulement du câble en spirale de sorte que l'enroulement du tapis sur une longueur donnée corresponde au déroulement du câble sur une longueur sensiblement égale, et vice versa.

7. Dispositif selon l'une des revendications 4 à 6, **caractérisé en ce que** le mécanisme à câble comprend en outre deux poulies de tension (56) autour desquelles s'enroulent respectivement les deux câbles (50) pour les maintenir sous tension.

8. Dispositif selon l'une des revendications 4 à 7, **caractérisé en ce que** les deux poulies de tension (56) sont portées par le distributeur (24).

9. Dispositif selon l'une des revendications 4 à 8, **caractérisé en ce que** les deux poulies de renvoi (62) sont portées chacune par un support (66) propre à être fixé à une partie antérieure (18) de la benne.

10. Dispositif selon l'une des revendications 1 à 9, **caractérisé en ce que** le tapis (34) est muni à son extrémité avant (46) d'une paroi verticale (78) servant à retenir le matériau.

11. Dispositif selon l'une des revendications 1 à 10, **caractérisé en ce que** le distributeur (24) comprend une trémie (26) alimentée par le chargeur (32) et munie de moyens répartiteurs (28) propres à épandre le matériau granulaire.

## Claims

1. Device for spreading a granular material, in particular for the treatment of roads, comprising a distributor (24) suitable to be fixed to the rear of a box of a lorry (12) or the like and a loader (32) to feed the distributor (24) with the material (M) contained in the box,
**characterised by** the fact that the loader (32) comprises a flexible mat (34) suitable to rest on a substantially horizontal deck (14) of the box (12) and to support the material (M), a winder mechanism (38) able to be arranged at the rear of the box and connected to a rear end (36) of the mat, a cable mechanism (50) connected to a front end (46) of the mat and means for co-ordination of the winder mechanism (38) and the cable mechanism (50) in such a manner that the mat can either be displaced towards the rear of the box under the influence of the winder mechanism (38) in order to feed the distributor (24) or be displaced towards the front of the box under the influence of the cable mechanism (50) for loading the box.

2. Device as described in claim 1, **characterised by** the fact that the winder mechanism (38) comprises a roller (40) with a horizontal axis (42) around which the mat (34) is wound or unwound and drive means (44) for driving the said roller in rotation about its axis in the direction of winding or in the direction of unwinding of the mat.

3. Device as described in claim 2, **characterised by** the fact that the roller (40) is carried by the distributor (24).

4. Device as described in one of claims 1 to 3, **characterised by** the fact that the cable mechanism comprises two cables (50), each of which includes a rear end (52) attached to a drive pulley (54) synchronised with the winder mechanism (38), passes around a return pulley (62) at the front of the box (12) and includes a front end (64) fixed to the front end (46) of the mat (12).

5. Device as described in claim 4, taken in combination with claim 2, **characterised by** the fact that the drive pulleys (54) are keyed onto the rotation shaft (42) of the roller (40) and by the fact that the cables (50) wind around the drive pulleys (54) in the opposite direction to the direction of winding of the mat (12) around the roller (40), so that the mat (34) winds, while the cables (50) unwind, and vice versa.

6. Device as described in one of claims 4 and 5, **characterised by** the fact that each of the drive pulleys (54) includes a narrow throat (74) suitable to allow winding of the cable in a spiral, so that winding of the mat over a given length corresponds to unwinding of the cable over a substantially equal length, and vice versa.

7. Device as described in one of claims 4 to 6, **characterised by** the fact that the cable mechanism also comprises two tension pulleys (56) around which the two cables (50) wind respectively to keep them under tension.

8. Device as described in one of claims 4 to 7, **characterised by** the fact that the two tension pulleys (56) are carried by the distributor (24).

9. Device as described in one of claims 4 to 8, **characterised by** the fact that the two return pulleys (62) are each carried by a support (66) suitable to be fixed to a rear part (18) of the box.

10. Device as described in one of claims 1 to 9, **characterised by** the fact that the mat (34) is provided at its front end (46) with a vertical wall (78) used to retain the material.

11. Device as described in one of claims 1 to 10, **characterised by** the fact that the distributor (24) includes a hopper (26) supplied by the loader (32) and provided with spreader means (28) suitable to spread the granular material.

## Patentansprüche

1. Vorrichtung zum Ausstreuen eines körnigen Materials, insbesondere zur Behandlung von Straßen, umfassend einen Verteiler (24), der dazu geeignet ist, hinten an einer Mulde eines Lastkraftwagens (12) oder dergleichen befestigt zu werden, und eine Beschickungseinrichtung (32) zum Speisen des Verteilers (24) mit dem in der Mulde enthaltenen Material (M),
**dadurch gekennzeichnet, daß** die Beschickungseinrichtung (32) ein flexibles Band (34), das dazu geeignet ist, auf einem im wesentlichen horizontalen Boden (14) der Mulde (12) zu ruhen und das Material (M) zu tragen, einen Aufrollmechanismus (38), der hinten an der Mulde angeordnet werden und mit einem hinteren Ende (36) des Bands verbunden werden kann, einen Seilmechanismus (50), der mit einem vorderen Ende (46) des Bands verbunden ist, und Mittel zur Koordination des Aufrollmechanismus (38) und des Seilmechanismus (50) umfaßt, derart, daß das Band entweder unter der Wirkung des Aufrollmechanismus (38) zwecks Speisung des Verteilers (24) zum hinteren Teil der Mulde hin verschoben oder unter der Wirkung des Seilmechanismus (50) zwecks Beladung der Mulde zum vorderen Teil der Mulde hin verschoben werden kann.

2. Vorrichtung nach Anspruch 1, **dadurch gekennzeichnet, daß** der Aufrollmechanismus (38) eine Trommel (40) mit horizontaler Achse (42), um die sich das Band (34) aufrollt oder abrollt, und Antriebsmittel (44) umfaßt, um die Trommel zur Drehung um ihre Achse in Richtung des Aufrollens oder in Richtung des Abrollens des Bands anzutreiben.

3. Vorrichtung nach Anspruch 2, **dadurch gekennzeichnet, daß** die Trommel (40) von dem Verteiler (24) getragen wird.

4. Vorrichtung nach einem der Ansprüche 1 bis 3, **dadurch gekennzeichnet, daß** der Seilmechanismus zwei Seile (50) umfaßt, von denen jedes ein hinteres Ende (52) aufweist, das an einer Antriebsrolle (54) befestigt ist, welche mit dem Aufrollmechanismus (38) synchronisiert ist, um eine Umlenkrolle (62) am vorderen Teil der Mulde (12) läuft und ein vorderes Ende (64) aufweist, das am vorderen Ende (46) des Bands (12) befestigt ist.

5. Vorrichtung nach Anspruch 4 in Verbindung mit Anspruch 2, **dadurch gekennzeichnet, daß** die Antriebsrollen (54) auf der Drehachse (42) der Trommel (40) fixiert sind und daß die Seile (50) in einer bezogen auf die Aufrollrichtung des Bands (12) um die Trommel (40) umgekehrten Richtung um die Antriebsrollen (54) aufgerollt werden, so daß sich das Band (34) aufrollt, während sich die Seile (50) abrollen, und umgekehrt.

6. Vorrichtung nach einem der Ansprüche 4 und 5, **dadurch gekennzeichnet, daß** jede der Antriebsrollen (54) eine schmale Rille (74) umfaßt, die dazu geeignet ist, das spiralförmige Aufrollen des Seils zu erlauben, derart, daß die Aufrollung des Bands über eine bestimmten Länge der Abrollung des Seils über eine im wesentlichen gleiche Länge entspricht, und umgekehrt.

7. Vorrichtung nach einem der Ansprüche 4 bis 6, **dadurch gekennzeichnet, daß** der Seilmechanismus außerdem zwei Spannrollen (56) umfaßt, um die sich jeweils die beiden Seile (50) winden, um sie unter Spannung zu halten.

8. Vorrichtung nach einem der Ansprüche 4 bis 7, **dadurch gekennzeichnet, daß** die beiden Spannrollen (56) von dem Verteiler (24) getragen werden.

9. Vorrichtung nach einem der Ansprüche 4 bis 8, **dadurch gekennzeichnet, daß** die beiden Umlenkrollen (62) jeweils von einer Halterung (66) getragen werden, die dazu geeignet ist, an einem vorderen Teil (18) der Mulde befestigt zu werden.

10. Vorrichtung nach einem der Ansprüche 1 bis 9, **dadurch gekennzeichnet, daß** das-Band (34) an seinem vorderen Ende (46) mit einer vertikalen Wand (78) versehen ist, die dazu dient, das Material zurückzuhalten.

11. Vorrichtung nach einem der Ansprüche 1 bis 10, **dadurch gekennzeichnet, daß** der Verteiler (24) einen Trichter (26) umfaßt, der von der Beschickungseinrichtung (32) gespeist wird und mit Verteilermitteln (28) versehen ist, die dazu geeignet sind, das körnige Material auszustreuen.
